# EUROPEAN PATENT APPLICATION

(11) **EP 4 408 109 A1**
(43) Date of publication of application: **31.07.2024**
(21) Application number: 21957761.6
(22) Date of filing: 22.09.2021
(51) Int. Cl.: H04W 74/04

(54) **METHOD FOR DETERMINING TRANSMISSION CONFIGURATION INDICATION STATE, AND APPARATUS THEREFOR**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2021/119699
(87) International publication number: WO 2023/044620

(57) **Abstract**

Disclosed in the embodiments of the present disclosure are a method for determining a transmission configuration indication state, and an apparatus therefor, which may be applied to the technical field of communications. The method, which is executed by a terminal device, comprises: receiving a media access control (MAC) control element (CE), wherein the MAC CE is used for activating a transmission configuration indication (TCI) state corresponding to at least one remote radio head (RRH). In this way, a terminal device may determine, by means of receiving a MAC CE for activating a TCI state corresponding to at least one RRH, a beam corresponding to the RRH, thereby not only ensuring that a plurality of RRHs may provide services for the terminal device at the same time, so as to improve the utilization rate of the remote radio heads, but also ensuring the coverage range of a signal.

## Description

### FIELD

The present disclosure relates to the field of communication technologies, and more particularly to a method for determining a transmission configuration indication state, and an apparatus for determining a transmission configuration indication state.

### BACKGROUND

In a communication system, in order to ensure the coverage of signals when a high frequency channel attenuates quickly, it is necessary to send and receive information based on a beam. In the related art, considering beam configurations of two transmission and reception points (TRPs), in a scenario of multiple pieces of downlink control information (multi DCI), a piece of DCI of each TRP indicates a transmission configuration indication (TCI) state of its own TRP. In a scenario of a single piece of DCI, a codepoint of one TCI field may support at most two TCI states.

When a network device includes multiple remote radio heads (RRHs), the multiple RRHs may provide services for a terminal device at the same time. Therefore, configuring a TCI state based on the multiple RRHs is an urgent problem to be solved at present.

### SUMMARY

Embodiments of the present disclosure provide a method for determining a transmission configuration indication state, and an apparatus for determining a transmission configuration indication state, which may be applied to the field of communication technologies.

In a first aspect, an embodiment of the present disclosure provides a method for determining a transmission configuration indication state, which is performed by a terminal device. The method includes receiving a medium access control (MAC) control element (CE). The MAC CE is configured to activate a transmission configuration indication (TCI) state corresponding to at least one remote radio head (RRH).

Alternatively, the RRH corresponds to any one of an RRH identifier (ID), a control resource set pool index, a transmission and reception point (TRP) ID, a reference signal resource set ID, and a reference signal resource ID.

Alternatively, the MAC CE is configured to activate M TCI states corresponding to each codepoint of L codepoints of a TCI field, and the L codepoints are all associated with one same control resource set pool index, where L and M are positive integers, respectively.

Alternatively, the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different, where N and K are positive integers, respectively.

Alternatively, the method further includes receiving downlink control information (DCI). The DCI is configured to indicate one codepoint of the N codepoints or the L codepoints.

Alternatively, the one control resource set pool index corresponds to one RRH or multiple RRHs.

Alternatively, the method further includes determining a control resource set pool index and/or an RRH identifier corresponding to each TCI state, according to the MAC CE.

Alternatively, the TCI state is at least one of a joint TCI state, an independent downlink TCI state, and an independent uplink TCI state. The joint TCI state is configured for both uplink and downlink transmissions.

Alternatively, the multiple RRHs correspond to a same physical cell identifier (PCI), or the multiple RRHs correspond to different PCIs.

In a second aspect, an embodiment of the present disclosure provides another method for determining a transmission configuration indication state, which is performed by a network device. The method includes sending a medium access control (MAC) control element (CE). The MAC CE is configured to activate a transmission configuration indication (TCI) state corresponding to at least one remote radio head (RRH).

Alternatively, the RRH corresponds to any one of an RRH identifier (ID), a control resource set pool index, a transmission and reception point (TRP) ID, a reference signal resource set ID, and a reference signal resource ID.

Alternatively, the MAC CE is configured to activate M TCI states corresponding to each codepoint of L codepoints of a TCI field, and the L codepoints are all associated with one same control resource set pool index, where L and M are positive integers, respectively.

Alternatively, the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different, where N and K are positive integers, respectively.

Alternatively, the method further includes sending downlink control information (DCI). The DCI is configured to indicate one codepoint of the N codepoints or the L codepoints.

Alternatively, the one control resource set pool index corresponds to one RRH or multiple RRHs.

Alternatively, the MAC CE is further configured to indicate a control resource set pool index and/or an RRH identifier corresponding to each TCI state.

Alternatively, the TCI state is at least one of a joint TCI state, an independent downlink TCI state, and an independent uplink TCI state. The joint TCI state is configured for both uplink and downlink transmissions.

Alternatively, the multiple RRHs correspond to a same physical cell identifier (PCI), or the multiple RRHs correspond to different PCIs.

In a third aspect, an embodiment of the present disclosure provides a communication apparatus. The communication apparatus has functions of realizing part or all of the terminal device in the method described in the first aspect above. For example, the functions of the communication apparatus may have the function of part or all of embodiments of the present disclosure, or may have the function of independently implementing any one of the embodiments of the present disclosure. The functions may be implemented by hardware, or may be implemented by hardware executing corresponding software. The hardware or software includes one or more units or modules corresponding to the above-mentioned functions.

In a fourth aspect, an embodiment of the present disclosure provides another communication apparatus. The communication apparatus has functions of realizing part or all of the network device in the method example described in the second aspect above. For example, functions of the communication apparatus may have the function of part or all of embodiments of the present disclosure, or may have the function of independently implementing any one of the embodiments of the present disclosure. The functions may be implemented by hardware, or may be implemented by hardware executing corresponding software. The hardware or software includes one or more units or modules corresponding to the above-mentioned functions.

In a fifth aspect, an embodiment of the present disclosure provides a communication device. The communication device includes a processor that, when invoking a computer program in a memory, causes the method described in the first aspect to be implemented.

In a sixth aspect, an embodiment of the present disclosure provides a communication device. The communication device includes a processor that, when invoking a computer program in a memory, causes the method described in the second aspect to be implemented.

In a seventh aspect, an embodiment of the present disclosure provides a communication device. The communication device includes a processor and a memory having stored therein a computer program. When the computer program is executed by the processor, it causes the communication device to perform the method described in the first aspect.

In an eighth aspect, an embodiment of the present disclosure provides a communication device. The communication device includes a processor and a memory having stored therein a computer program. When the computer program is executed by the processor, it causes the communication device to perform the method described in the second aspect.

In a ninth aspect, an embodiment of the present disclosure provides a communication device. The communication device includes a processor and an interface circuit. The interface circuit is configured to receive code instructions and transmit the code instructions to the processor, and the processor is configured to execute the code instructions to cause the device to perform the method described in the first aspect.

In a tenth aspect, an embodiment of the present disclosure provides a communication device. The communication device includes a processor and an interface circuit. The interface circuit is configured to receive code instructions and transmit the code instructions to the processor, and the processor is configured to execute the code instructions to cause the device to perform the method described in the second aspect.

In an eleventh aspect, an embodiment of the present disclosure provides a communication system. The system includes a communication apparatus described in the third aspect and a communication apparatus described in the fourth aspect. Alternatively, the system includes the communication device described in the fifth aspect and the communication device described in the sixth aspect. Alternatively, the system includes the communication device described in the seventh aspect and the communication device described in the eighth aspect. Alternatively, the system includes the communication device described in the ninth aspect and the communication device described in the tenth aspect.

In a twelfth aspect, an embodiment of the present disclosure provides a computer-readable storage medium having stored therein instructions used for the terminal device that, when executed, cause the method described in the first aspect to be implemented.

In a thirteenth aspect, an embodiment of the present disclosure provides a computer-readable storage medium having stored therein instructions used for the network device that, when executed, cause the method described in the second aspect to be implemented.

In a fourteenth aspect, the present disclosure also provides a computer program product. The computer program product includes a computer program that, when runs on a computer, causes the computer to perform the method described in the first aspect.

In a fifteenth aspect, the present disclosure also provides a computer program product. The computer program product includes a computer program that, when runs on a computer, causes the computer to perform the method described in the second aspect.

In a sixteenth aspect, the present disclosure provides a chip system. The chip system includes at least one processor and an interface, for supporting the terminal device to realize the functions involved in the first aspect, for example, determine or process at least one of data and information involved in the above-mentioned method. In a possible design, the chip system further includes a memory. The memory is configured to store necessary computer programs and data of the terminal device. The chip system may be composed of chips, and may also include chips and other discrete devices.

In a seventeenth aspect, the present disclosure provides a chip system. The chip system includes at least one processor and an interface, for supporting the network device to realize the functions involved in the second aspect, for example, determine or process at least one of data and information involved in the above-mentioned method. In a possible design, the chip system further includes a memory. The memory is configured to store necessary computer programs and data of the network device. The chip system may be composed of chips, and may also include chips and other discrete devices.

In an eighteenth aspect, the present disclosure provides a computer program that, when runs on a computer, causes the computer to perform the method described in the first aspect.

In a nineteenth aspect, the present disclosure provides a computer program that, when runs on a computer, causes the computer to perform the method described in the second aspect.

### BRIEF DESCRIPTION OF THE DRAWINGS

In order to more clearly illustrate technical solutions in embodiments of the present disclosure or the background, the accompanying drawings will be illustrated below, which are needed to be used in the embodiments of the present disclosure or the background.
FIG. 1 is a schematic diagram of a communication system provided in an embodiment of the present disclosure.
FIG. 2 is a flow chart of a method for determining a transmission configuration indication state provided in an embodiment of the present disclosure.
FIG. 3 is a flow chart of a method for determining a transmission configuration indication state provided in another embodiment of the present disclosure.
FIG. 4 is a flow chart of a method for determining a transmission configuration indication state provided in another embodiment of the present disclosure.
FIG. 5 is a flow chart of a method for determining a transmission configuration indication state provided in another embodiment of the present disclosure.
FIG. 6 is a flow chart of a method for determining a transmission configuration indication state provided in another embodiment of the present disclosure.
FIG. 7 is a flow chart of a method for determining a transmission configuration indication state provided in another embodiment of the present disclosure.
FIG. 8 is a flow chart of a method for determining a transmission configuration indication state provided in another embodiment of the present disclosure.
FIG. 9 is a flow chart of a method for determining a transmission configuration indication state provided in another embodiment of the present disclosure.
FIG. 10 is a schematic diagram of a communication apparatus in an embodiment of the present disclosure.
FIG. 11 is a schematic diagram of a communication device in another embodiment of the present disclosure.
FIG. 12 is a schematic diagram of a chip in an embodiment of the present disclosure.

### DETAILED DESCRIPTION

For ease of understanding, terms involved in the present disclosure are firstly introduced.

### 1. Remote Radio Head (RRH)

At a remote end, a baseband optical signal is converted into a radio frequency signal for amplification and transmission. It may also be referred to as a remote radio unit (abbreviated as RRU).

### 2. Transmission Configuration Indication (TCI)

It is used to inform a terminal device which synchronization signal block (SSB) or channel state information reference signal (CSI-RS) sent by a network device is received with a same receiving beam as that used in receiving a physical downlink control channel (PDCCH) and a physical downlink shared channel (PDSCH).

Alternatively, it is used to inform a terminal device which reference signal, such as a sounding reference signal (SRS) is sent with a same sending beam as that used in sending a physical uplink control channel (PUCCH) and a physical uplink shared channel (PUSCH). Alternatively, it is used to inform a terminal device which reference signal, such as a SSB or a CSI-RS is received with a receiving beam corresponding to a sending beam used in sending a PUCCH and a PUSCH.

### 3. Medium Access Control (MAC) Control Element (CE)

A MAC CE is a way to exchange control information between a user equipment (UE) and a network in addition to a radio resource control (RRC) message and a non-access stratum (NAS) message. It exchanges control information about a MAC stratum.

### 4. Downlink Control Information (DCI)

DCI is control information related to physical uplink and downlink shared channels (PUSCH, PDSCH) transmitted on a PDCCH. DCI includes several related contents such as resource block (RB) allocation information, a modulation mode and so on. Only when a terminal correctly decodes the DCI, may it correctly process PDSCH data or PUSCH data.

In order to better understand a method for determining a transmission configuration indication state disclosed in an embodiment of the present disclosure, a communication system applicable to the embodiment of the present disclosure will be firstly described below.

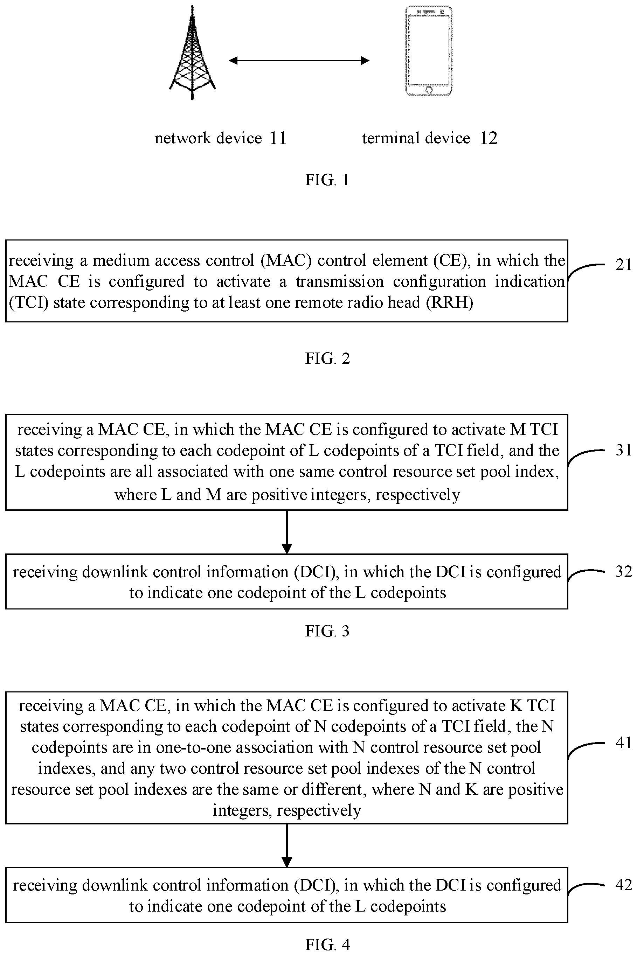

Referring to FIG. 1, FIG. 1 is a schematic diagram of a communication system provided in an embodiment of the present disclosure. The communication system may include, but is not limited to, one network device, and one terminal device. The number and form of devices shown in FIG. 1 are for illustration merely, and do not constitute a limitation of the embodiment of the present disclosure. In a practical application, the communication system may include two or more network devices, and two or more terminal devices. The communication system shown in FIG. 1 may include one network device 11 and one terminal device 12.

It is to be noted that the technical solution of the embodiment of the present disclosure may be applied to various communication systems, for example, a long term evolution (LTE) system, a 5th generation (5G) mobile communication system, a 5G new radio (NR) system, or other future new mobile communication systems, etc.

The network device 11 in the embodiment of the present disclosure is an entity on a network side for transmitting or receiving signals. For example, the network device 11 may be an evolved NodeB (eNB), a transmission reception point (TRP), a next generation NodeB (gNB) in an NR system, a base station in other future mobile communication systems, an access node in a wireless fidelity (WiFi) system, or the like. A specific technology and a specific device form adopted by the network device are not limited in the embodiment of the present disclosure. The network device provided in the embodiment of the present disclosure may be composed of a central unit (CU) and a distributed unit (DU). The CU may also be referred to as a control unit. A structure adopting a CU-DU may separate protocol layers of the network device, such as a base station, functions of part of the protocol layers are centrally controlled by the CU, functions of the remaining part or all of the protocol layers are distributed in the DU, and the DU is centrally controlled by the CU.

The terminal device 12 in the embodiment of the present disclosure is an entity on a user side configured to receive or transmit signals, such as a mobile phone. The terminal device may also be referred to as a terminal, a user equipment (UE), a mobile station (MS), a mobile terminal (MT), and so on. The terminal may be a car with a communication function, a smart car, a mobile phone, a wearable device, a Pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in smart grid, a wireless terminal in transportation safety, a wireless terminal in a smart city, a wireless terminal in a smart home, etc. A specific technology and a specific device form adopted by the terminal device are not limited in the embodiment of the present disclosure.

It may be understood that the communication system described in the embodiment of the present disclosure is to illustrate the technical solution of the embodiment of the present disclosure more clearly, and does not constitute a limitation of the technical solution provided in the embodiment of the present disclosure. It is known by those of ordinary skill in the art that with the evolution of a system architecture and the emergence of new business scenarios, the technical solution provided in the embodiment of the present disclosure is also applicable to similar technical problems.

A method for determining a transmission configuration indication state, and an apparatus for determining a transmission configuration indication state provided in the present disclosure will be described in detail below with reference to the accompanying drawings.

Referring to FIG. 2, FIG. 2 is a flow chart of a method for determining a transmission configuration indication state provided in an embodiment of the present disclosure, and the method is performed by a terminal device. As shown in FIG. 2, the method may include, but is not limited to a step as follows.

In step 21, a medium access control (MAC) control element (CE) is received. The MAC CE is configured to activate a transmission configuration indication (TCI) state corresponding to at least one remote radio head (RRH).

It may be understood that in case that a network device includes multiple RRHs, the network device may configure the terminal device with different TCI states corresponding to the multiple RRHs, and send a TCI state corresponding to each RRH to the terminal device via configuration information. Then, according to needs, the MAC CE is configured to activate the TCI state corresponding to the RRH. Further, the terminal device may determine the TCI state corresponding to the RRH, that is, determine a beam used for receiving a PDCCH and a PDSCH corresponding to the RRH, or a beam used for sending a PUCCH and a PUSCH.

Alternatively, the RRH may correspond to at least one of an RRH identifier (ID), a transmission and reception point (TRP) ID, a control resource set pool index (CORESETPoolIndex), a reference signal resource set ID, and a reference signal resource ID. That is, in the embodiment of the present disclosure, the RRH may be interchanged with a TRP, a CORESETPoolIndex, a reference signal resource set, or a reference signal resource.

Alternatively, the TCI state is at least one of a joint TCI state, an independent downlink TCI state, and an independent uplink TCI state. The joint TCI state is configured for both uplink and downlink transmissions.

Alternatively, different RRHs may correspond to a same physical cell identifier (PCI), or different RRHs may also correspond to different PCIs, which is not limited in the present disclosure.

By implementing the embodiment of the present disclosure, the terminal device may determine the beam corresponding to the RRH by receiving the MAC CE configured to activate the TCI state corresponding to the at least one RRH, thus not only ensuring that the multiple RRHs may provide services for the terminal device at the same time, improving the utilization rate of the RRH, but also ensuring the coverage of signals.

Referring to FIG. 3, FIG. 3 is a flow chart of a method for determining a transmission configuration indication state provided in an embodiment of the present disclosure, and the method is performed by a terminal device. As shown in FIG. 3, the method may include, but is not limited to steps as follows.

In step 31, a medium access control (MAC) control element (CE) is received. The MAC CE is configured to activate M TCI states corresponding to each codepoint of L codepoints of a TCI field, and the L codepoints are all associated with one same control resource set pool index, where L and M are positive integers, respectively.

Alternatively, the one control resource set pool index (CORESETPoolIndex) may correspond to one RRH or multiple RRHs. For example, RRH1 and RRH2 may both correspond to one same CORESETPoolIndex. Alternatively, RRH1 corresponds to CORESETPoolIndex1, and RRH2 corresponds to CORESETPoolIndex2.

It is to be noted that, in the embodiment of the present disclosure, there may be multiple MAC CEs, for example, 2, 3, etc., which is not limited in the present disclosure. Each MAC CE may activate the M TCI states corresponding to each codepoint of L codepoints of the TCI field included in one CORESETPoolIndex associated therewith. Different MAC CEs may activate TCI states corresponding to different CORESETPoolIndexes.

Alternatively, the terminal device may also determine a control resource set pool index and/or an RRH identifier corresponding to each TCI state according to the MAC CE.

For example, in the embodiment of the present disclosure, TCI states corresponding to a control resource set pool index activated by any MAC CE may be as shown in Table 1.

**Table 1**

| CORESETPoolIndex | |
|---|---|
| TCI codepoint#0 | TCI(0,1) |
| | TCI(0,2) |
| | TCI(0,3) |
| | ...... |
| TCI codepoint#1 | TCI(1,1) |
| | TCI(1,2) |
| | TCI(1,3) |
| | ...... |
| TCI codepoint#2 | TCI(2,1) |
| | TCI(2,2) |
| | TCI(2,3) |
| | ...... |
| ...... | |

CORESETPoolIndex is the control resource set pool index activated by the MAC CE. TCI codepoint#0, TCI codepoint#1, TCI codepoint#2, and so on are codepoints included in the TCI field, respectively. TCI(0,1), TCI(0,2), TCI(0,3), and so on are TCI states corresponding to TCI codepoint#0. TCI(1,1), TCI(1,2), TCI(1,3) and so on are TCI states corresponding to TCI codepoint#1. TCI(2,1), TCI(2,2), TCI(2,3) and so on are TCI states corresponding to TCI codepoint#2, and so forth. It is to be noted that the number of TCI states corresponding to each TCI codepoint may be X at most, and X may be 2, 3, or 4, or even larger, which is not limited in the present disclosure. The number of TCI states corresponding to each TCI codepoint given in Table 1 is 3, which is merely an example.

It may be understood that every element and every correspondence in Table 1 exists independently. These elements and correspondence are illustratively listed in a same table, but it does not mean that all elements and correspondences in the table must exist at the same time as shown in Table 1. A value of each element and each correspondence are independent of a value of any other element or correspondence in Table 1. Therefore, those skilled in the art may understand that the value of each element and each correspondence in Table 1 are independent embodiments.

In step 32, downlink control information (DCI) is received. The DCI is configured to indicate one codepoint of the L codepoints.

Alternatively, the DCI may indicate the one codepoint of the L codepoints, so that the terminal device may determine one TCI state or multiple TCI states corresponding to the codepoint according to the codepoint and a correspondence between the codepoint and the TCI state indicated by the MAC CE.

It is to be noted that when L is equal to 1, the terminal device may determine the TCI state corresponding to the RRH, that is, the beam corresponding to the RRH merely according to the MAC CE. When a value of L is greater than 1, for example, L is 2 or 3, the terminal device needs to determine the codepoint indicated by the DCI from the L codepoints according to the DCI sent by a network device after receiving the MAC CE sent by the network device, and then determine the beam corresponding to the RRH according to the TCI state corresponding to the codepoint.

By implementing the embodiment of the present disclosure, the terminal device first receives the MAC CE configured to activate the M TCI states corresponding to each codepoint of the L codepoints of the TCI field, in which the L codepoints are all associated with the one same control resource set pool index, then determines a corresponding TCI state according to the codepoint indicated by the DCI, and further determines the beam corresponding to the RRH, when L is greater than 1, thus not only ensuring that the multiple RRHs may provide services for the terminal device at the same time, improving the utilization rate of the RRH, but also ensuring the coverage of signals.

Referring to FIG. 4, FIG. 4 is a flow chart of a method for determining a transmission configuration indication state provided in an embodiment of the present disclosure, and the method is performed by a terminal device. As shown in FIG. 4, the method may include, but is not limited to steps as follows.

In step 41, a medium access control (MAC) control element (CE) is received. The MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different, where N and K are positive integers, respectively.

Alternatively, one control resource set pool index may correspond to one RRH or multiple RRHs. For example, RRH1 and RRH2 may both correspond to one same CORESETPoolIndex. Alternatively, RRH1 corresponds to CORESETPoolIndex1, and RRH2 corresponds to CORESETPoolIndex2.

Alternatively, the terminal device may determine a control resource set pool index and/or an RRH identifier corresponding to each TCI state according to the MAC CE.

It may be understood that, in the embodiment of the present disclosure, there may be one MAC CE, and the one MAC CE may activate the K TCI states corresponding to each codepoint of the N codepoints of the TCI field corresponding to the multiple RRHs.

Alternatively, RRH identifiers corresponding to codepoints of each TCI field are independently indicated. That is, the codepoints of each TCI field may correspond to different RRHs.

For example, in the embodiment of the present disclosure, TCI states corresponding to control resource set pool indexes activated by any MAC CE may be as shown in Table 2.

**Table 2**

| | | |
|---|---|---|
| CORESETPoolIndex#0 | TCI codepoint#0 | TCI(0,1) |
| | | TCI(0,2) |
| | | TCI(0,3) |
| | | ...... |
| CORESETPoolIndex#1 | TCI codepoint#1 | TCI(1,1) |
| | | TCI(1,2) |
| | | TCI(1,3) |
| | | ...... |
| CORESETPoolIndex#2 | TCI codepoint#2 | TCI(2,1) |
| | | TCI(2,2) |
| | | TCI(2,3) |
| | | ...... |
| ...... | | |

As shown in Table 2, after receiving the MAC CE, the terminal device may determine that TCI(0,1), TCI(0,2), TCI(0,3), and so on are TCI states corresponding to CORESETPoolIndex#0, and TCI codepoint#0 is associated with CORESETPoolIndex#0. TCI(1,1), TCI(1,2), TCI(1,3), and so on are TCI states corresponding to CORESETPoolIndex#1, and TCI codepoint#1 is associated with CORESETPoolIndex#1. TCI(2,1), TCI(2,2), TCI(2,3), and so on are TCI states corresponding to CORESETPoolIndex#1, and TCI codepoint#2 is associated with CORESETPoolIndex#2, and so forth. When different RRHs correspond to different CORESETPoolIndexes, CORESETPoolIndex corresponding to each TCI codepoint may be configured independently, that is, different TCI codepoints may correspond to a same CORESETPoolIndex or different CORESETPoolIndexes. It also means that the different TCI codepoints may correspond to a same RRH or different RRHs.

It may be understood that every element and every correspondence in Table 2 exists independently. These elements and correspondences are illustratively listed in a same table, but it does not mean that all elements and correspondences in the table must exist at the same time as shown in Table 2. A value of each element and each correspondence are independent of a value of any other element or correspondence in Table 2. Therefore, those skilled in the art may understand that the value of each element and each correspondence in Table 2 are independent embodiments.

In step 42, downlink control information (DCI) is received. The DCI is configured to indicate one codepoint of the N codepoints.

For the specific implementation of step 42, reference may be made to the detailed descriptions in other embodiments of the present disclosure, which will not be elaborated herein.

By implementing the embodiment of the present disclosure, the terminal device first receives the MAC CE configured to activate the K TCI states corresponding to each codepoint of the N codepoints of the TCI field, in which the N codepoints are in one-to-one association with N control resource set pool indexes, then determines a corresponding TCI state according to the codepoint indicated by the DCI, and determines a beam corresponding to the RRH, when L is greater than 1, thus not only ensuring that multiple RRHs may provide services for the terminal device at the same time, improving the utilization rate of the RRH, but also ensuring the coverage of signals.

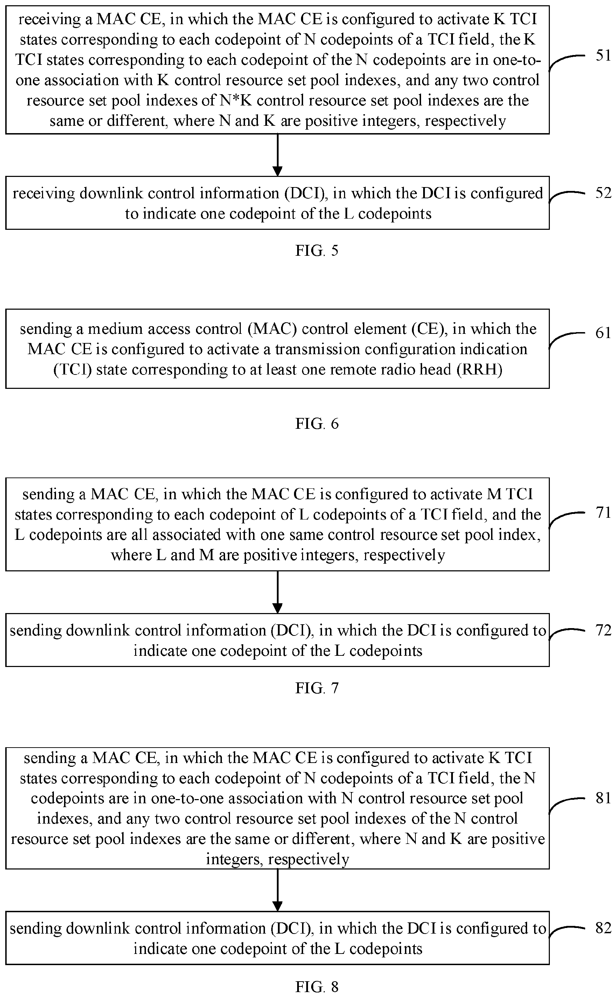

Referring to FIG. 5, FIG. 5 is a flow chart of a method for determining a transmission configuration indication state provided in an embodiment of the present disclosure, and the method is performed by a terminal device. As shown in FIG. 5, the method may include, but is not limited to steps as follows.

In step 51, a medium access control (MAC) control element (CE) is received. The MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different, where N and K are positive integers, respectively.

Alternatively, one control resource set pool index (CORESETPoolIndex) may correspond to one RRH or multiple RRHs. For example, RRH1 and RRH2 may both correspond to one same CORESETPoolIndex. Alternatively, RRH1 corresponds to CORESETPoolIndex1, and RRH2 corresponds to CORESETPoolIndex2.

Alternatively, the terminal device may determine a CORESETPoolIndex and/or an RRH identifier corresponding to each TCI state according to the MAC CE.

It may be understood that, in the embodiment of the present disclosure, there may be one MAC CE, and the one MAC CE may activate the K TCI states corresponding to each codepoint of the N codepoints of the TCI field corresponding to the multiple RRHs.

Alternatively, when independent uplink TCI states and/or multiple independent downlink TCI states are used, the independent downlink TCI states corresponding to one same codepoint of a TCI field correspond to one CORESETPoolIndex, and the independent uplink TCI states corresponding to one same codepoint of a TCI field correspond to one CORESETPoolIndex. That is, CORESETPoolIndex corresponding to the independent downlink TCI states corresponding to the one same codepoint of the TCI field and CORESETPoolIndex corresponding to the independent uplink TCI states corresponding to the one same codepoint of the TCI field may be configured independently. When different RRHs correspond to different CORESETPoolIndexes, that is, multiple TCI states corresponding to one same codepoint of a TCI field may be configured as different RRH identifiers, or may be configured as a same RRH identifier.

Alternatively, in case that the one same codepoint of the TCI field corresponds to the multiple TCI states, each TCI state may correspond to one CORESETPoolIndex, that is, the multiple TCI states corresponding to the one same codepoint of the TCI field may correspond to different CORESETPoolIndexes, respectively. When different RRHs correspond to different CORESETPoolIndexes, that is, the multiple TCI states corresponding to the one same codepoint of the TCI field may be configured as different RRH identifiers, or may be configured as a same RRH identifier.

The multiple TCI states may be multiple joint TCI states, or multiple independent uplink TCI states, and/or multiple independent downlink TCI states, etc., which is not limited in the present disclosure.

For example, in the embodiment of the present disclosure, TCI states corresponding to control resource set pool indexes activated by any MAC CE may be shown in Table 3.

**Table 3**

| | | |
|---|---|---|
| TCI codepoint#0 | TCI(0,1) | CORESETPoolIndex#0 |
| | TCI(0,2) | CORESETPoolIndex#1 |
| | TCI(0,3) | CORESETPoolIndex#2 |
| | ...... | |
| TCI codepoint#1 | TCI(1,1) | CORESETPoolIndex#3 |
| | TCI(1,2) | CORESETPoolIndex#0 |
| | TCI(1,3) | CORESETPoolIndex#1 |
| | ...... | ...... |
| TCI codepoint#2 | TCI(2,1) | CORESETPoolIndex#2 |
| | TCI(2,2) | CORESETPoolIndex#1 |
| | TCI(2,3) | CORESETPoolIndex#0 |
| | ...... | ...... |
| ...... | | |

As shown in Table 3, after receiving the MAC CE, the terminal device may determine that TCI states corresponding to TCI codepoint#0 may include TCI(0,1), TCI(0,2), TCI(0,3), and so on. The CORESETPoolIndex corresponding to TCI(0,1) may be CORESETPoolIndex#0, the CORESETPoolIndex corresponding to TCI(0,2) may be CORESETPoolIndex#1, and the CORESETPoolIndex corresponding to TCI(0,3) may be CORESETPoolIndex#2. TCI states corresponding to TCI codepoint#1 may include TCI(1,1), TCI(1,2), TCI(1,3), and so on. The CORESETPoolIndex corresponding to TCI(1,1) may be CORESETPoolIndex#3, the CORESETPoolIndex corresponding to TCI(1,2) may be CORESETPoolIndex#0, and the CORESETPoolIndex corresponding to TCI(1,3) may be CORESETPoolIndex#1. TCI states corresponding to TCI codepoint#2 may include TCI(2,1), TCI(2,2), TCI(2,3), and so on. The CORESETPoolIndex corresponding to TCI(2,1) may be CORESETPoolIndex#2, the CORESETPoolIndex corresponding to TCI(2,2) may be CORESETPoolIndex#1, and the CORESETPoolIndex corresponding to TCI(2,3) may be CORESETPoolIndex#0. When different RRHs correspond to different CORESETPoolIndexes, that is, the multiple TCI states corresponding to the one same codepoint of the TCI field may be configured as different RRH identifiers, or may be configured as a same RRH identifier.

It may be understood that every element and every correspondence in Table 3 exists independently. These elements and correspondences are illustratively listed in a same table, but it does not mean that all elements and correspondences in the table must exist at the same time as shown in Table 3. A value of each element and each correspondence are independent of a value of any other element or correspondence in Table 3. Therefore, those skilled in the art may understand that the value of each element and each correspondence in Table 3 are independent embodiments.

In step 52, downlink control information (DCI) is received. The DCI is configured to indicate one codepoint of the N codepoints.

For the specific implementation of step 52, reference may be made to the detailed descriptions in other embodiments of the present disclosure, which will not be elaborated herein.

By implementing the embodiment of the present disclosure, the terminal device first receives the MAC CE configured to activate the K TCI states corresponding to each codepoint of the N codepoints of the TCI field, in which the K TCI states corresponding to each codepoint of the N codepoints are in one-to-one association with the K control resource set pool indexes, then determines a corresponding TCI state according to the codepoint indicated by the DCI, and determines a beam corresponding to the RRH, when L is greater than 1, thus not only ensuring that multiple RRHs may provide services for the terminal device at the same time, improving the utilization rate of the RRH, but also ensuring the coverage of signals.

Referring to FIG. 6, FIG. 6 is a flow chart of a method for determining a transmission configuration indication state provided in an embodiment of the present disclosure, and the method is performed by a network device. As shown in FIG. 6, the method may include, but is not limited to a step as follows.

In step 61, a medium access control (MAC) control element (CE) is sent. The MAC CE is configured to activate a transmission configuration indication (TCI) state corresponding to at least one remote radio head (RRH).

It may be understood that in case that the network device includes multiple RRHs, the network device may configure a terminal device with different TCI states corresponding to the multiple RRHs, and send a TCI state corresponding to each RRH to the terminal device via configuration information. Then, according to needs, the MAC CE is configured to activate the TCI state corresponding to the RRH. Further, the terminal device may determine the TCI state corresponding to the RRH, that is, determine a beam used for receiving a PDCCH and a PDSCH corresponding to the RRH, or a beam used for sending a PUCCH and a PUSCH.

Alternatively, the RRH may correspond to at least one of an RRH identifier (ID), a transmission and reception point (TRP) ID, a control resource set pool index (CORESETPoolIndex), a reference signal resource set ID, and a reference signal resource ID. That is, in the embodiment of the present disclosure, the RRH may be interchanged with a TRP, a CORESETPoolIndex, a reference signal resource set, or a reference signal resource.

Alternatively, the TCI state is at least one of a joint TCI state, an independent downlink TCI state, and an independent uplink TCI state. The joint TCI state is configured for both uplink and downlink transmissions.

Alternatively, different RRHs may correspond to a same physical cell identifier (PCI), or different RRHs may also correspond to different PCIs, which is not limited in the present disclosure.

By implementing the embodiment of the present disclosure, the network device sends the MAC CE configured to activate the TCI state corresponding to the at least one RRH to the terminal device, so that the terminal device determines the beam corresponding to the RRH, thus not only ensuring that the multiple RRHs may provide services for the terminal device at the same time, improving the utilization rate of the RRH, but also ensuring the coverage of signals.

Referring to FIG. 7, FIG. 7 is a flow chart of a method for determining a transmission configuration indication state provided in an embodiment of the present disclosure, and the method is performed by a network device. As shown in FIG. 7, the method may include, but is not limited to steps as follows.

In step 71, a medium access control (MAC) control element (CE) is sent. The MAC CE is configured to activate M TCI states corresponding to each codepoint of L codepoints of a TCI field, and the L codepoints are all associated with one same control resource set pool index, where L and M are positive integers, respectively.

Alternatively, one control resource set pool index (CORESETPoolIndex) may correspond to one RRH or multiple RRHs. For example, RRH1 and RRH2 may both correspond to one same CORESETPoolIndex. Alternatively, RRH1 corresponds to CORESETPoolIndex1, and RRH2 corresponds to CORESETPoolIndex2.

It is to be noted that, in the embodiment of the present disclosure, there may be multiple MAC CEs, for example, 2, 3, etc., which is not limited in the present disclosure. Each MAC CE may activate the M TCI states corresponding to each codepoint of L codepoints of the TCI field included in one CORESETPoolIndex associated therewith. Different MAC CEs may activate TCI states corresponding to different CORESETPoolIndexes.

Alternatively, the MAC CE sent by the network device may also indicate a control resource set pool index and/or an RRH identifier corresponding to each TCI state to the terminal device.

For example, in the embodiment of the present disclosure, TCI states corresponding to a control resource set pool index activated by any MAC CE may be as shown in Table 1 in any embodiment of the present disclosure, which will not be elaborated herein.

In step 72, downlink control information (DCI) is sent. The DCI is configured to indicate one codepoint of the L codepoints.

Alternatively, the DCI may indicate the one codepoint of the L codepoints, so that the terminal device may determine one TCI state or multiple TCI states corresponding to the codepoint according to the codepoint and a correspondence between the codepoint and the TCI state indicated by the MAC CE.

It is to be noted that when L is equal to 1, the network device only needs to send the MAC CE, and the terminal device may determine the TCI state corresponding to the RRH, that is, a beam corresponding to the RRH. When a value of L is greater than 1, for example, L is 2 or 3, the network device needs to send the DCI to the terminal device after sending the MAC CE to the terminal device, so that the terminal device may determine the codepoint indicated by the DCI from the L codepoints, and then determine the beam corresponding to the RRH according to the TCI state corresponding to the codepoint.

By implementing the embodiment of the present disclosure, the network device first sends the MAC CE configured to activate the M TCI states corresponding to each codepoint of the L codepoints of the TCI field to the terminal device, in which the L codepoints are all associated with the one same control resource set pool index, and then sends the DCI to the terminal device when L is greater than 1, so that the terminal device determines a corresponding TCI state according to the codepoint indicated by the DCI, and determines the beam corresponding to the RRH, thus not only ensuring that the multiple RRHs may provide services for the terminal device at the same time, improving the utilization rate of the RRH, but also ensuring the coverage of signals.

Referring to FIG. 8, FIG. 8 is a flow chart of a method for determining a transmission configuration indication state provided in an embodiment of the present disclosure, and the method is performed by a network device. As shown in FIG. 8, the method may include, but is not limited to steps as follows.

In step 81, a medium access control (MAC) control element (CE) is sent. The MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different, where N and K are positive integers, respectively.

Alternatively, one control resource set pool index may correspond to one RRH or multiple RRHs. For example, RRH1 and RRH2 may both correspond to one same CORESETPoolIndex. Alternatively, RRH1 corresponds to CORESETPoolIndex1, and RRH2 corresponds to CORESETPoolIndex2.

Alternatively, the MAC CE sent by the network device may also indicate a control resource set pool index and/or an RRH identifier corresponding to each TCI state to a terminal device.

It may be understood that, in the embodiment of the present disclosure, there may be one MAC CE, and the one MAC CE may activate the K TCI states corresponding to each codepoint of the N codepoints of the TCI field corresponding to the multiple RRHs.

Alternatively, RRH identifiers corresponding to codepoints of each TCI field are independently indicated. That is, the codepoints of each TCI field may correspond to different RRHs.

For example, in the embodiment of the present disclosure, TCI states corresponding to a control resource set pool index activated by any MAC CE may be as shown in Table 2 in any embodiment of the present disclosure, which will not be elaborated herein.

In step 82, downlink control information (DCI) is sent. The DCI is configured to indicate one codepoint of the N codepoints.

For the specific implementation of step 82, reference may be made to the detailed descriptions in other embodiments of the present disclosure, which will not be elaborated herein.

By implementing the embodiment of the present disclosure, the network device first sends the MAC CE configured to activate the K TCI states corresponding to each codepoint of the N codepoints of the TCI field to the terminal device, in which the N codepoints are in one-to-one association with N control resource set pool indexes, and then send the DCI to the terminal device when L is greater than 1, so that the terminal device may determine a corresponding TCI state according to the codepoint indicated by the DCI, and then determines a beam corresponding to the RRH, thus not only ensuring that the multiple RRHs may provide services for the terminal device at the same time, improving the utilization rate of the RRH, but also ensuring the coverage of signals.

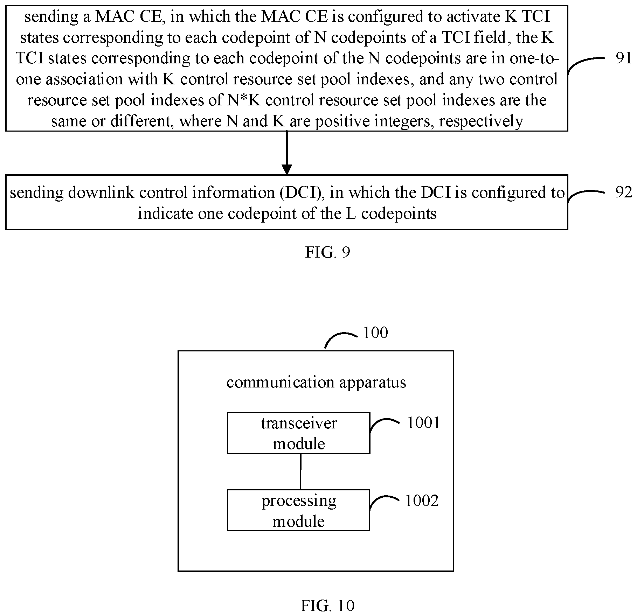

Referring to FIG. 9, FIG. 9 is a flow chart of a method for determining a transmission configuration indication state provided in an embodiment of the present disclosure, and the method is performed by a network device. As shown in FIG. 9, the method may include, but is not limited to steps as follows.

In step 91, a medium access control (MAC) control element (CE) is sent. The MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different, where N and K are positive integers, respectively.

Alternatively, one control resource set pool index (CORESETPoolIndex) may correspond to one RRH or multiple RRHs. For example, RRH1 and RRH2 may both correspond to one same CORESETPoolIndex. Alternatively, RRH1 corresponds to CORESETPoolIndex1, and RRH2 corresponds to CORESETPoolIndex2.

Alternatively, the MAC CE sent by the network device may also indicate a control resource set pool index and/or an RRH identifier corresponding to each TCI state to a terminal device.

It may be understood that, in the embodiment of the present disclosure, there may be one MAC CE, and the one MAC CE may activate the K TCI states corresponding to each codepoint of the N codepoints of the TCI field corresponding to the multiple RRHs.

Alternatively, when independent uplink TCI states and/or multiple independent downlink TCI states are used, the independent downlink TCI states corresponding to one same codepoint of a TCI field correspond to one CORESETPoolIndex, and the independent uplink TCI states corresponding to one same codepoint of a TCI field correspond to one CORESETPoolIndex. That is, CORESETPoolIndex corresponding to the independent downlink TCI states corresponding to the one same codepoint of the TCI field and CORESETPoolIndex corresponding to the independent uplink TCI states corresponding to the one same codepoint of the TCI field may be configured independently. When different RRHs correspond to different CORESETPoolIndexes, that is, multiple TCI states corresponding to one same codepoint of a TCI field may be configured as different RRH identifiers, or may be configured as a same RRH identifier.

Alternatively, in case that the one same codepoint of the TCI field corresponds to the multiple TCI states, each TCI state may correspond to one CORESETPoolIndex, that is, the multiple TCI states corresponding to the one same codepoint of the TCI field may correspond to different CORESETPoolIndexes, respectively. When different RRHs correspond to different CORESETPoolIndexes, that is, the multiple TCI state corresponding to the one same codepoint of the TCI field may be configured as different RRH identifiers, or may be configured as a same RRH identifier.

The multiple TCI states may be multiple joint TCI states, or multiple independent uplink TCI states, and/or multiple independent downlink TCI states, etc., which is not limited in the present disclosure.

For example, in the embodiment of the present disclosure, TCI states corresponding to control resource set pool indexes activated by any MAC CE may be as shown in Table 3 in any embodiment of the present disclosure, which will not be elaborated herein.

In step 92, downlink control information (DCI) is sent. The DCI is configured to indicate one codepoint of the N codepoints.

For the specific implementation of step 92, reference may be made to the detailed descriptions in other embodiments of the present disclosure, which will not be elaborated herein.

By implementing the embodiment of the present disclosure, the network device first sends the MAC CE configured to activate the K TCI states corresponding to each codepoint of the N codepoints of the TCI field to the terminal device, in which the K TCI states corresponding to each codepoint of the N codepoints are in one-to-one association with K control resource set pool indexes, and then sends the DCI to the terminal device when L is greater than 1, so that the terminal device may determine a corresponding TCI state according to the codepoint indicated by the DCI, and then determine a beam corresponding to the RRH, thus not only ensuring that the multiple RRHs may provide services for the terminal device at the same time, improving the utilization rate of the RRH, but also ensuring the coverage of signals.

In the above-mentioned embodiments provided in the present disclosure, the methods provided in the embodiments of the present disclosure are introduced from perspectives of the network device and the terminal device, respectively. In order to realize various functions in the method provided in the above-mentioned embodiment of the present disclosure, the network device and the terminal device may include a hardware structure and a software module, respectively, and the above-mentioned various functions are realized in a form of a hardware structure, a software module, or a hardware structure plus a software module. A certain function in the above-mentioned various functions may be implemented in a form of a hardware structure, a software module, or a hardware structure plus a software module.

Referring to FIG. 10, FIG. 10 is a schematic diagram of a communication apparatus 100 provided in an embodiment of the present disclosure. The communication apparatus 100 shown in FIG. 10 may include a processing module 1001 and a transceiver module 1002.

The transceiver module 1002 may include a sending module and/or a receiving module. The sending module is configured to realize a sending function, and the receiving module is configured to realize a receiving function. The transceiver module 1002 may realize a sending function and/or a receiving function.

It may be understood that the communication apparatus 100 may be a terminal device, may also be an apparatus in the terminal device, and may also be an apparatus that may be matched with the terminal device.

A communication apparatus 100, on a terminal device side, includes a transceiver module 1002 configured to receive a medium access control (MAC) control element (CE). The MAC CE is configured to activate a transmission configuration indication (TCI) state corresponding to at least one remote radio head (RRH).

Alternatively, the RRH corresponds to any one of an RRH identifier (ID), a control resource set pool index, a transmission and reception point (TRP) ID, a reference signal resource set ID, and a reference signal resource ID.

Alternatively, the MAC CE is configured to activate M TCI states corresponding to each codepoint of L codepoints of a TCI field, and the L codepoints are all associated with one same control resource set pool index, where L and M are positive integers, respectively.

Alternatively, the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different, where N and K are positive integers, respectively.

Alternatively, the transceiver module 1002 is further specifically configured to receive downlink control information (DCI). The DCI is configured to indicate one codepoint of the N codepoints or the L codepoints.

Alternatively, the one control resource set pool index corresponds to one RRH or multiple RRHs.

Alternatively, the communication apparatus 100 further includes a determining module 1001 configured to determine a control resource set pool index and/or an RRH identifier corresponding to each TCI state, according to the MAC CE.

Alternatively, the TCI state is at least one of a joint TCI state, an independent downlink TCI state, and an independent uplink TCI state. The joint TCI state is configured for both uplink and downlink transmissions.

Alternatively, the multiple RRHs correspond to a same physical cell identifier (PCI), or the multiple RRHs correspond to different PCIs.

According to the communication apparatus provided in the present disclosure, the terminal device may determine a beam corresponding to the RRH by receiving the MAC CE configured to activate the TCI state corresponding to the at least one RRH, thus not only ensuring that the multiple RRHs may provide services for the terminal device at the same time, improving the utilization rate of the RRH, but also ensuring the coverage of signals.

It may be understood that the communication apparatus 100 may be a network device, may also be an apparatus in the network device, and may also be an apparatus that may be matched with the network device.

A communication apparatus 100, on a network device side, includes a transceiver module 1002 configured to send a medium access control (MAC) control element (CE). The MAC CE is configured to activate a transmission configuration indication (TCI) state corresponding to at least one remote radio head (RRH).

Alternatively, the RRH corresponds to any one of an RRH identifier (ID), a control resource set pool index, a transmission and reception point (TRP) ID, a reference signal resource set ID, and a reference signal resource ID.

Alternatively, the MAC CE is configured to activate M TCI states corresponding to each codepoint of L codepoints of a TCI field, and the L codepoints are all associated with one same control resource set pool index, where L and M are positive integers, respectively.

Alternatively, the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different, where N and K are positive integers, respectively.

Alternatively, the transceiver module 1002 is further specifically configured to send downlink control information (DCI). The DCI is configured to indicate one codepoint of the N codepoints or the L codepoints.

Alternatively, the one control resource set pool index corresponds to one RRH or multiple RRHs.

Alternatively, the MAC CE is further configured to indicate a control resource set pool index and/or an RRH identifier corresponding to each TCI state.

Alternatively, the TCI state is at least one of a joint TCI state, an independent downlink TCI state, and an independent uplink TCI state. The joint TCI state is configured for both uplink and downlink transmissions.

Alternatively, the multiple RRHs correspond to a same physical cell identifier (PCI), or the multiple RRHs correspond to different PCIs.

According to the communication apparatus provided in the present disclosure, the network device sends the MAC CE configured to activate the TCI state corresponding to the at least one RRH to a terminal device, so that the terminal device may determine a beam corresponding to the RRH, thus not only ensuring that the multiple RRHs may provide services for the terminal device at the same time, improving the utilization rate of the RRH, but also ensuring the coverage of signals.

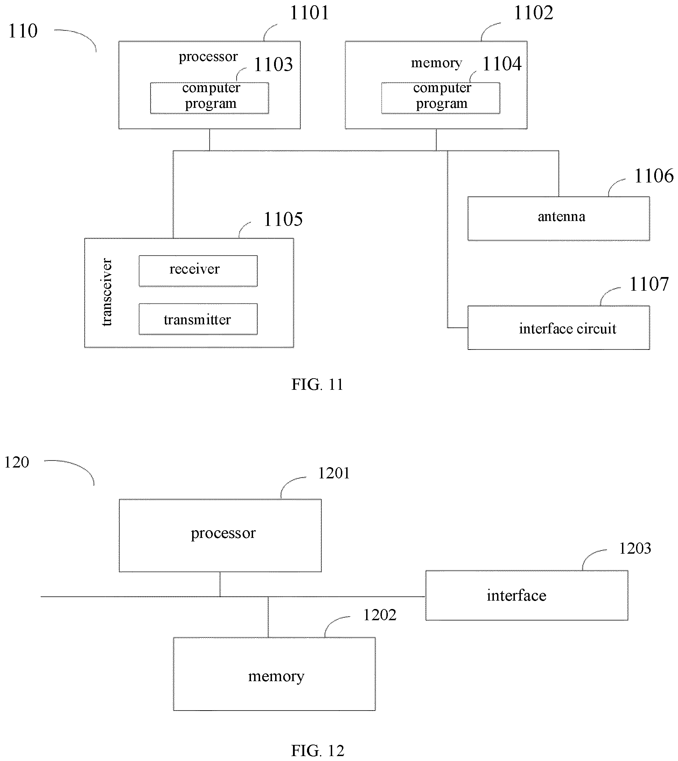

Referring to FIG. 11, FIG. 11 is a schematic diagram of another communication device 110 provided in an embodiment of the present disclosure. The communication device 110 may be a network device, may also be a terminal device, may also be a chip, a chip system, or a processor that supports the network device to implement the above-mentioned method, and may also be a chip, a chip system, or a processor that supports the terminal device to implement the above-mentioned method. The apparatus may be configured to implement the method described in the above-mentioned method embodiment. For details, reference may be made to the description in the above-mentioned method embodiment.

The communication device 110 may include one or more processors 1101. The processor 1101 may be a generic processor, a dedicated processor, or the like. For example, the processor 1101 may be a baseband processor or a central processor. The baseband processor may be configured to process a communication protocol and communication data, and the central processor may be configured to control a communication device (such as, a base station, a baseband chip, a terminal, a terminal chip, a DU, a CU, or the like), execute computer programs, and process data of the computer programs.

Alternatively, the communication device 110 may further include one or more memories 1102, on which a computer program 1104 may be stored, and the processor 1101 executes the computer program 1104, so that the communication device 110 executes the method described in the above-mentioned method embodiments. Alternatively, data may also be stored in the memory 1102. The communication device 110 and the memory 1102 may be provided separately or integrated together.

Alternatively, the communication device 110 may further include a transceiver 1105 and an antenna 1106. The transceiver 1105 may be referred to as a transceiver unit, a transceiver machine, a transceiver circuit, or the like, and is configured to realize a transceiver function. The transceiver 1105 may include a receiver and a transmitter. The receiver may be referred to as a receiving machine a receiving circuit, or the like, for realizing a receiving function. The transmitter may be referred to as a transmitting machine, a transmitting circuit, or the like, and is configured to realize a transmitting function.

Alternatively, the communication device 110 may further include one or more interface circuits 1107. The interface circuit 1107 is configured to receive code instructions and transmit the code instructions to the processor 1101. The processor 1101 executes the code instructions to enable the communication device 110 to perform the method described in the above-mentioned method embodiments.

The communication device 110 is a terminal device. The transceiver 1105 is configured to execute step 21 in FIG. 2, steps 31 and 32 in FIG. 3, steps 41 and 42 in FIG. 4, steps 51 and 52 in FIG. 5, or the like.

The communication device 110 is a network device. The transceiver 1105 is configured to execute step 61 in FIG. 6, steps 71 and 72 in FIG. 7, steps 81 and 82 in FIG. 8, steps 91 and 92 in FIG. 9, or the like.

In an implementation, the processor 1101 may include a transceiver configured to implement receiving and transmitting functions. For example, the transceiver may be a transceiver circuit, an interface, or an interface circuit. The transceiver circuit, the interface, or the interface circuit configured to implement the receiving and transmitting functions may be separated or integrated together. The transceiver circuit, the interface, or the interface circuit may be configured to read and write codes/data, or the transceiver circuit, the interface, or the interface circuit may be configured for signal transmission or transfer.

In an implementation, the processor 1101 may store a computer program 1103, and the computer program 1103 runs on the processor 1101, which may cause the communication device 110 to execute the method described in the above-mentioned method embodiments. The computer program 1103 may be solidified in the processor 1101, and in this case, the processor 1101 may be implemented by hardware.

In an implementation, the communication device 110 may include a circuit, and the circuit may realize a function of transmitting, receiving or communicating in the above-mentioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by using various IC process technologies, such as complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above-mentioned embodiment may be the network device or the terminal device, but the scope of the communication device described in the present disclosure is not limited thereto, and a structure of the communication device may not be limited by FIG. 11. The communication device may be a stand-alone device or may be part of a larger device. For example, the communication device may be (1) a stand-alone integrated circuit (IC), a chip, or a chip system or subsystem, (2) a set of one or more ICs, additionally, the set of the IC may also include storage components for storing data and computer programs, (3) an ASIC, such as a modem, (4) a module that may be embedded in other devices, (5) a receiver, a terminal, an intelligent terminal, a cellular phone, a wireless device, a handset, a mobile unit, a vehicle-mounted device, a network device, a cloud equipment, an artificial intelligence device, etc., (6) other devices, and so on.

For a case where the communication device may be a chip or a chip system, reference may be made to the schematic diagram of the chip shown in FIG. 12. The chip shown in FIG. 12 includes a processor 1201 and an interface 1202. The number of processors 1201 may be one or multiple, and the number of interfaces 1202 may be multiple.

For a case where the chip is configured to realize functions of the terminal device in the embodiments of the present disclosure, the interface 1202 is configured to execute step 21 in FIG. 2, steps 31 and 32 in FIG. 3, steps 41 and 42 in FIG. 4, steps 51 and 52 in FIG. 5, or the like.

For a case where the chip is configured to realize functions of the network device in the embodiments of the present disclosure, the interface 1202 is configured to execute step 61 in FIG. 6, steps 71 and 72 in FIG. 7, steps 81 and 82 in FIG. 8, steps 91 and 92 in FIG. 9, or the like.

Alternatively, the chip further includes a memory 1203 for storing necessary computer programs and data.

Those skilled in the art may also understand that various illustrative logical blocks and steps listed in the embodiments of the present disclosure may be implemented by electronic hardware, computer software, or a combination thereof. Whether this function is realized by hardware or software depends on a specific application and design requirements of the whole system. Those skilled in the art may use various methods to realize the described functions for each specific application, but this realization should not be understood as extending beyond the scope of protection of the embodiments of the present disclosure.

An embodiment of the present disclosure also provides a communication system. The system includes a communication apparatus as a terminal device and a communication apparatus as a network device in the above-mentioned embodiments of FIG. 10. Alternatively, the system includes a communication device as a terminal device and a communication device as a network device in the above-mentioned embodiments of FIG. 11.

The present disclosure also provides a computer-readable readable storage medium having stored therein instructions that, when executed by a computer, cause functions of any one of the above-mentioned method embodiments to be implemented.

The present disclosure also provides a computer program product that, when executed by a computer, cause functions of any one of the above-mentioned method embodiments to be implemented.

In the above-mentioned embodiments, all or part of the functions may be realized by software, hardware, firmware or any combination thereof. When the functions are realized by using software, all or part of the functions may be realized in a form of a computer program product. The computer program product includes one or more computer programs. When the computer program is loaded and executed on a computer, all or part of the functions is generated according to the processes or functions in the embodiments of the present disclosure. The computer may be a generic computer, a dedicated computer, a computer network, or other programmable devices. The computer program may be stored in the computer-readable storage medium or transmitted from one computer-readable storage medium to another computer-readable storage medium. For example, the computer program may be transmitted from a website, a computer, a server or a data center to another website, another computer, another server or another data center in a wired (for example, a coaxial cable, an optical fiber, a digital subscriber line (DSL)) or unwired (for example, infrared, wireless, microwave, etc.) manner. The computer-readable storage medium may be any available medium that may be accessed by a computer, or a data storage device such as a server, or a data center that contains and is integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

It may be understood by those of ordinary skill in the art that numerical numbers such as the first, the second and the like involved in the present disclosure are merely a convenient distinction for description, and are not used to limit the scope of the embodiments of the present disclosure, but also indicate the sequence.

At least one of the present disclosure may also be described as one or plurality, and the plurality may be two, three, four or more, which is not limited in the present disclosure. In an embodiment of the present disclosure, for one type of technical feature, technical features in the type of technical feature are distinguished by "first," "second," "third," "A," "B," "C," and "D". There is no precedence or magnitude order between the technical features described with "first," "second," "third," "A," "B," "C," and "D " .

A correspondence shown in each table in the present disclosure may be configured or predefined. Values of the information in each table are merely examples, and may be configured as other values, which is not limited in the present disclosure. When configuring a correspondence between information and parameters, it is not necessary to configure all correspondences shown in each table. For example, in the table in the present disclosure, a correspondence shown in some rows may not be configured. For another example, appropriate deformation adjustments may be made based on the above-mentioned table, such as splitting, merging, and so on. Names of the parameters shown in the titles of the above-mentioned tables may also adopt other names that may be understood in the communication device, and values or representations of the parameters may also be other values or representations that may be understood in the communication device. Other data structures may also be adopted when the above-mentioned tables are implemented, such as arrays, queues, containers, stacks, linear tables, pointers, linked lists, trees, graphs, structures, classes, Hashed lists, Hash tables, etc.

The pre-definition in the present disclosure may be understood as definition, definition in advance, storage, pre-storage, pre-negotiation, pre-configuration, curing, or pre-firing.

Those of ordinary skill in the art may appreciate that units and algorithm steps in various examples described in conjunction with the embodiments disclosed herein may be implemented in electronic hardware, or a combination of computer software and electronic hardware. Whether these functions are executed in hardware or software depends on the specific application and design constraints of the technical solution. Those skilled in the art may use different methods to implement the described functions for each specific application, but such implementation should not be considered as extending beyond the scope of the present disclosure.

It may be clearly understood by those skilled in the art that for the convenience and conciseness of the description, specific working processes of the above-described systems, apparatuses and units may refer to corresponding processes in the above-mentioned method embodiments, which will not be elaborated herein.

The above is merely the specific implementation of the present disclosure, and the scope of the protection of the present disclosure is not limited thereto. Changes or substitutions will readily occur to those skilled in the art within the technical scope of the present disclosure, which is to be covered within the scope of protection of the present disclosure. Therefore, the scope of protection of the present disclosure is as set forth in the scope of protection of the claims.

## Claims

1. A method for determining a transmission configuration indication state, performed by a terminal device, comprising:
receiving a medium access control (MAC) control element (CE), wherein the MAC CE is configured to activate a transmission configuration indication (TCI) state corresponding to at least one remote radio head (RRH).

2. The method of claim 1, wherein the RRH corresponds to any one of: an RRH identifier (ID), a control resource set pool index, a transmission and reception point (TRP) ID, a reference signal resource set ID, and a reference signal resource ID.

3. The method of claim 1, wherein
the MAC CE is configured to activate M TCI states corresponding to each codepoint of L codepoints of a TCI field, and the L codepoints are all associated with one same control resource set pool index, where L and M are positive integers, respectively.

4. The method of claim 1, wherein
the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or
the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different;
where N and K are positive integers, respectively.

5. The method of claim 3 or 4, further comprising:
receiving downlink control information (DCI), wherein the DCI is configured to indicate one codepoint of the N codepoints or the L codepoints.

6. The method of claim 3 or 4, wherein
the one control resource set pool index corresponds to one RRH or multiple RRHs.

7. The method of claim 3 or 4, further comprising:
determining a control resource set pool index and/or an RRH identifier corresponding to each TCI state, according to the MAC CE.

8. The method of any one of claims 1 to 7, wherein the TCI state is at least one of: a joint TCI state, an independent downlink TCI state, and an independent uplink TCI state, wherein the joint TCI state is configured for both uplink and downlink transmissions.

9. The method of any one of claims 1 to 7, wherein
the multiple RRHs correspond to a same physical cell identifier (PCI), or the multiple RRHs correspond to different PCIs.

10. A method for determining a transmission configuration indication state, performed by a network device, comprising:
sending a medium access control (MAC) control element (CE), wherein the MAC CE is configured to activate a transmission configuration indication (TCI) state corresponding to at least one remote radio head (RRH).

11. The method of claim 10, wherein the RRH corresponds to any one of: an RRH identifier (ID), a control resource set pool index, a transmission and reception point (TRP) ID, a reference signal resource set ID, and a reference signal resource ID.

12. The method of claim 10, wherein
the MAC CE is configured to activate M TCI states corresponding to each codepoint of L codepoints of a TCI field, and the L codepoints are all associated with one same control resource set pool index, where L and M are positive integers, respectively.

13. The method of claim 10, wherein
the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or
the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different;
where N and K are positive integers, respectively.

14. The method of claim 12 or 13, further comprising:
sending downlink control information (DCI), wherein the DCI is configured to indicate one codepoint of the N codepoints or the L codepoints.

15. The method of claim 12 or 13, wherein the one control resource set pool index corresponds to one RRH or multiple RRHs.

16. The method of claim 12 or 13, wherein
the MAC CE is further configured to indicate a control resource set pool index and/or an RRH identifier corresponding to each TCI state.

17. The method of any one of claims 10 to 16, wherein the TCI state is at least one of: a joint TCI state, an independent downlink TCI state, and an independent uplink TCI state, wherein the joint TCI state is configured for both uplink and downlink transmissions.

18. The method of any one of claims 10 to 16, wherein
the multiple RRHs correspond to a same physical cell identifier (PCI), or the multiple RRHs correspond to different PCIs.

19. A communication apparatus, performed by a terminal device side, comprising:
a transceiver module configured to receive a medium access control (MAC) control element (CE), wherein the MAC CE is configured to activate a transmission configuration indication (TCI) state corresponding to at least one remote radio head (RRH).

20. The apparatus of claim 19, wherein the RRH corresponds to any one of: an RRH identifier (ID), a control resource set pool index, a transmission and reception point (TRP) ID, a reference signal resource set ID, and a reference signal resource ID.

21. The apparatus of claim 19, wherein
the MAC CE is configured to activate M TCI states corresponding to each codepoint of L codepoints of a TCI field, and the L codepoints are all associated with one same control resource set pool index, where L and M are positive integers, respectively.

22. The apparatus of claim 19, wherein
the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or
the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different;
where N and K are positive integers, respectively.

23. The apparatus of claim 21 or 22, wherein the transceiver module is further specifically configured to:
receive downlink control information (DCI), wherein the DCI is configured to indicate one codepoint of the N codepoints or the L codepoints.

24. The apparatus of claim 21 or 22, wherein
the one control resource set pool index corresponds to one RRH or multiple RRHs.

25. The apparatus of claim 21 or 22, further comprising:
a determining module configured to determine a control resource set pool index and/or an RRH identifier corresponding to each TCI state, according to the MAC CE.

26. The apparatus of any one of claims 19 to 28, wherein the TCI state is at least one of: a joint TCI state, an independent downlink TCI state, and an independent uplink TCI state, wherein the joint TCI state is configured for both uplink and downlink transmissions.

27. The apparatus of any one of claims 19 to 25, wherein
the multiple RRHs correspond to a same physical cell identifier (PCI), or the multiple RRHs correspond to different PCIs.

28. A communication apparatus, performed by a network device side, comprising:
a transceiver module configured to send a medium access control (MAC) control element (CE), wherein the MAC CE is configured to activate a transmission configuration indication (TCI) state corresponding to at least one remote radio head (RRH).

29. The apparatus of claim 28, wherein the RRH corresponds to any one of: an RRH identifier (ID), a control resource set pool index, a transmission and reception point (TRP) ID, a reference signal resource set ID, and a reference signal resource ID.

30. The apparatus of claim 28, wherein
the MAC CE is configured to activate M TCI states corresponding to each codepoint of L codepoints of a TCI field, and the L codepoints are all associated with one same control resource set pool index, where L and M are positive integers, respectively.

31. The apparatus of claim 28, wherein
the MAC CE is configured to activate K TCI states corresponding to each codepoint of N codepoints of a TCI field, the N codepoints are in one-to-one association with N control resource set pool indexes, and any two control resource set pool indexes of the N control resource set pool indexes are the same or different; or
the MAC CE is configured to activate K TCI states corresponding to each codepoint of N codepoints of a TCI field, the K TCI states corresponding to each codepoint of the N codepoints are in one-to-one association with K control resource set pool indexes, and any two control resource set pool indexes of N*K control resource set pool indexes are the same or different;
where N and K are positive integers, respectively.

32. The apparatus of claim 30 or 31, wherein the transceiver module is further specifically configured to:
send downlink control information (DCI), wherein the DCI is configured to indicate one codepoint of the N codepoints or the L codepoints.

33. The apparatus of claim 30 or 31, wherein the one control resource set pool index corresponds to one RRH or multiple RRHs.

34. The apparatus of claim 30 or 31, wherein
the MAC CE is further configured to indicate a control resource set pool index and/or an RRH identifier corresponding to each TCI state.

35. The apparatus of any one of claims 28 to 34, wherein the TCI state is at least one of: a joint TCI state, an independent downlink TCI state, and an independent uplink TCI state, wherein the joint TCI state is configured for both uplink and downlink transmissions.

36. The apparatus of any one of claims 28 to 34, wherein
the multiple RRHs correspond to a same physical cell identifier (PCI), or the multiple RRHs correspond to different PCIs.

37. A communication device, comprising:
a processor; and
a memory having stored therein computer programs;
wherein the processor is configured to execute the computer programs stored in the memory to cause the communication device to perform the method of any one of claims 1 to 9.

38. A communication device, comprising:
a processor; and
a memory having stored therein computer programs;
wherein the processor is configured to execute the computer programs stored in the memory to cause the communication device to perform the method of any one of claims 10 to 18.

39. A communication device, comprising:
a processor; and
an interface circuit configured to receive code instructions and transmit the code instructions to the processor;
wherein the processor is configured to run the code instructions to perform the method of any one of claims 1 to 9.

40. A communication device, comprising:
a processor; and
an interface circuit configured to receive code instructions and transmit the code instructions to the processor;
wherein the processor is configured to run the code instructions to perform the method of any one of claims 10 to 18.

41. A computer-readable storage medium having stored therein instruction that, when executed, cause the method of any one of claims 1 to 9 to be implemented.

42. A computer-readable storage medium having stored therein instruction that, when executed, cause the method of any one of claims 10 to 18 to be implemented.
